Europäisches Patentamt

European Patent Office

Office européen des brevets

(19)

(11) Numéro de publication: **0 1 9 9 6 1 1**
**B1**

(12) **FASCICULE DE BREVET EUROPEEN**

(45) Date de publication du fascicule du brevet:
21.02.90

(21) Numéro de dépôt: **86400537.6**

(22) Date de dépôt: **13.03.86**

(51) Int. Cl.⁵: **H 01 M 8/24, H 01 M 2/02**

(54) Pile à combustible à élément de séparation.

(30) Priorité: **15.03.85 FR 8503855**

(43) Date de publication de la demande:
**29.10.86 Bulletin 86/44**

(45) Mention de la délivrance du brevet:
**21.02.90 Bulletin 90/8**

(84) Etats contractants désignés:
**DE FR GB**

(56) Documents cités:
**EP-A- 0 061 942**
**DE-A- 2 733 047**
**FR-A- 2 117 963**
**FR-A- 2 140 664**
**FR-A- 2 146 602**
**FR-A- 2 178 076**
**FR-A- 2 300 426**
**FR-A- 2 302 598**
**FR-A- 2 440 084**
**US-A- 3 944 435**

**EXTENDED ABSTRACTS, vol. 82-2, 17-21 octobre 1982, pages 467-468, Pennington New Jersey, US; P.N. ROSS Jr.: "Engineering analysis of an NH3-air fuel cell system for vehicles"**

(73) Titulaire: **OCCIDENTAL CHEMICAL CORPORATION, P.O. Box 189, Niagara Falls New York 14302 (US)**

(72) Inventeur: **Fauvel, Pierre, 18 rue de la Midorge Boullay les Troux, F-91470 Limours (FR)**

(74) Mandataire: **Weinmiller, Jürgen et al, Lennéstrasse 9 Postfach 24, D-8133 Feldafing (DE)**

## Description

La présente invention concerne une pile à combustible selon le préambule de la revendication 1.

Lorsque l'on réalise un empilement répétitif selon une séquence élémentaire prédéterminée des cadres ainsi définis qui présentent des séries d'orifices superposés, on obtient en particulier une pluralité d'éléments de piles montés en série électrique, ayant un canal commun pour amener l'électrolyte dans chaque compartiment électrolytique et un canal commun pour évacuer cet électrolyte, une pluralité de canaux communs pour alimenter toutes les anodes en combustible et une pluralité de canaux communs pour évacuer les gaz.

Quant au comburant, il circule dans la pile en traversant directement les compartiments cathodiques dans une direction verticale par des orifices et des moyens de répartition prévus sur les bords inférieurs et supérieurs des cadres correspondants.

Tous ces cadres en matériau plastique sont minces; leur épaisseur peut être choisie entre 0,2 mm et 5 mm, et ils sont avantageusement moulés.

Le matériau des cadres peut être choisi parmi les matériaux isolants synthétiques de type polypropylène, polyéthylène, chlorure de polyvinyle, acrylonitrile-butadiène-styrène, polysulfone, polystyrène.

On sait que chaque compartiment électrolytique peut contenir un séparateur microporeux constitué par exemple par une feuille gaufrée. Ce séparateur imprégné d'électrolyte introduit une certaine résistance au passage des ions, ce qui conduit à une chute ohmique faible mais non négligeable.

Un séparateur peut avoir une ou plusieurs des fonctions suivantes.

Il doit pouvoir maintenir une certaine distance entre les électrodes et éviter ainsi toute possibilité de court-circuit, quelques soient les causes de rapprochement des électrodes, par exemple le gauchissement des ensembles collecteur-électrode, le décollement local d'une électrode, etc...

Il doit pouvoir maintenir de préférence un écartement constant entre les électrodes sur toute la surface d'un élément, de manière à assurer un écoulement uniforme de l'électrolyte.

Il doit constituer une paroi, ou un réseau hydrophile, facilitant par effet de mèche le remplissage complet du compartiment électrolytique par la solution électrolytique, remplissage rendu difficile par la nature hydrophobe ou semi-hydrophobe des deux parois que constituent les surfaces des deux électrodes.

Il doit permettre de réaliser, grâce à sa surface hydrophile, une lame liquide continue ou quasi-continue capable de subsister comme telle même en cas de vidange accidentelle du compartiment électrolytique, par exemple à la suite de la perforation d'une électrode. Cette lame forme ainsi un écran empêchant le mélange direct possible des deux gaz avec conséquences éventuelles, telles que inflammation et combustion à l'intérieur de la pile, explosion, etc...

La présente invention a pour but de mettre en oeuvre dans le compartiment électrolytique un séparateur mieux adapté à la structure très particulière des compartiments électrolytiques d'une pile selon l'invention.

La présente invention a pour objet une pile à combustible selon le préambule de la revendication 1, dont le compartiment électrolytique contient un séparateur constitué d'un grille en matériau isolant formant une pièce unitaire avec ledit troisième ou ledit quatrième cadre, et comprenant des barreaux qui sont parallèles entre eux et au sens de l'écoulement de l'électrolyte. Ils peuvent être reliés entre eux par des fils de trame en même matériau.

Selon un mode de réalisation particulier, des picots espaceurs sont prévus aux croisements desdits barreaux et desdits fils de trames. Lesdits picots peuvent avoir la forme de disques dont le diamètre est supérieur au pas des cannelures présentées par lesdites électrodes.

Le matériau desdits barreaux est choisi de préférence parmi le polypropylène, le chlorure de polyvinyle, le nylon et le polyéthylène.

D'autres caractéristiques et avantages de la présente invention apparaîtront au cours de la description suivante de modes de réalisation donnés à titre illustratif mais nullement limitatif. Dans le dessin annexé:

— la figure 1 est une vue schématique en perspective d'une pile conforme à l'invention,

— la figure 2 est une vue schématique en perspective éclatée d'un élément de la pile de la figure 1,

— la figure 3 est une vue schématique en perspective éclatée du compartiment électrolytique de l'élement de la figure 2, comportant un séparateur selon l'invention,

— la figure 4 est une vue en élévation de la face cathodique d'un collecteur de courant bipolaire appartenant à l'élément de la figure 2,

— la figure 5 est une vue en élévation de la face anodique du collecteur de courant bipolaire appartenant à l'élément de la figure 2,

— la figure 6 est une coupe schématique agrandie selon la ligne VI-VI de la figure 4,

— la figure 7 est une vue en perspective agrandie du détail VII de la figure 4,

— la figure 8 est une vue en perspective agrandie du détail VIII de la figure 5,

— la figure 9 montre en élévation une variante de séparateur selon l'invention,

— la figure 10 montre en perspective un détail du séparateur de la figure 9,

— la figure 11 est une vue en élévation d'une variante de séparateur selon l'invention,

— la figure 12 est une coupe agrandie selon la ligne XII-XII de la figure 11,

— la figure 13 est une vue en élévation d'une variante de séparateur selon l'invention,

— la figure 14 est une vue agrandie d'un détail du séparateur de la figure 13.

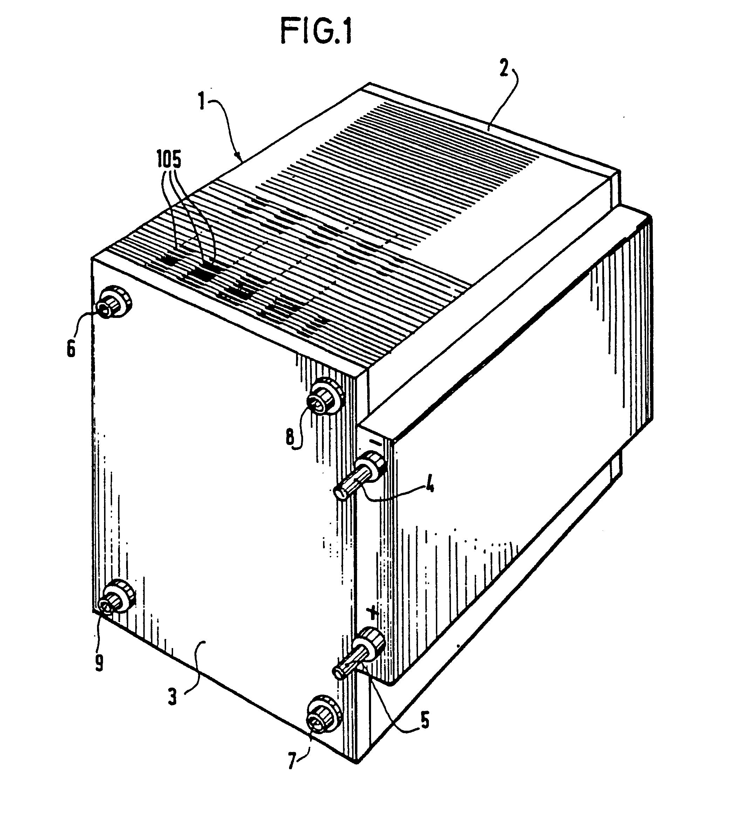

On voit sur la figure 1 une pile 1 formée d'un empilement d'éléments; elle est munie de ses plaques d'extrémité 2 et 3 et de ses bornes terminales 4 et 5 reliées chacune à un des collecteurs d'extrémité terminant l'empilement.

Des orifices 6 et 7 désignent respectivement l'orifice d'introduction et l'orifice d'évacuation de l'électrolyte.

Des orifices 8 et 9 désignent respectivement l'orifice d'introduction et l'orifice d'évacuation du combustible gazeux, en l'occurence l'hydrogène.

Le comburant gazeux (l'air) pénètre dans la pile par les extrémités de rainures 105 apparaissant sur la face supérieure de la pile.

Des orifices analogues sont situés sur la face inférieure de la pile.

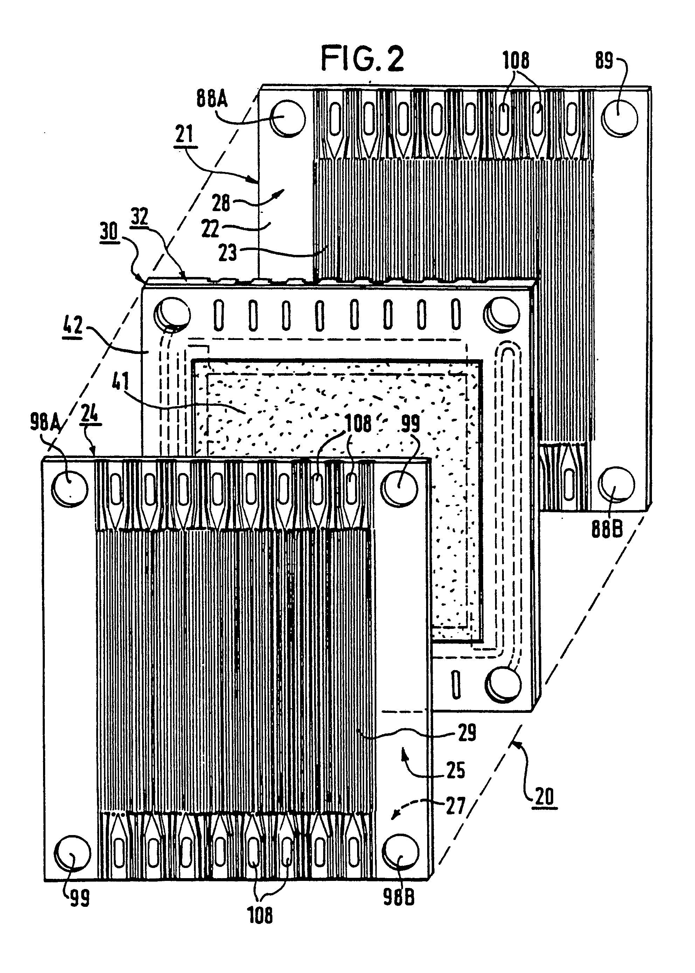

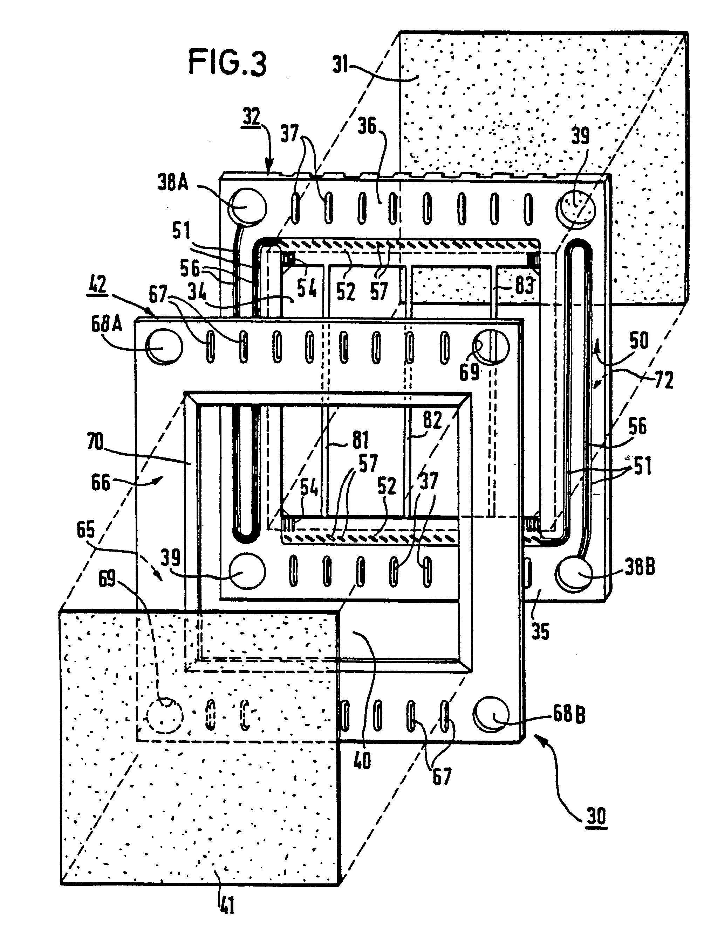

La pile 1 est constituée par la juxtaposition d'éléments 20 tel que celui qui apparaît schématiquement en perspective éclatée sur la figure 2; le composant référencé 30 apparaissant dans cette figure est lui-même montré en perspective éclatée dans la figure 3.

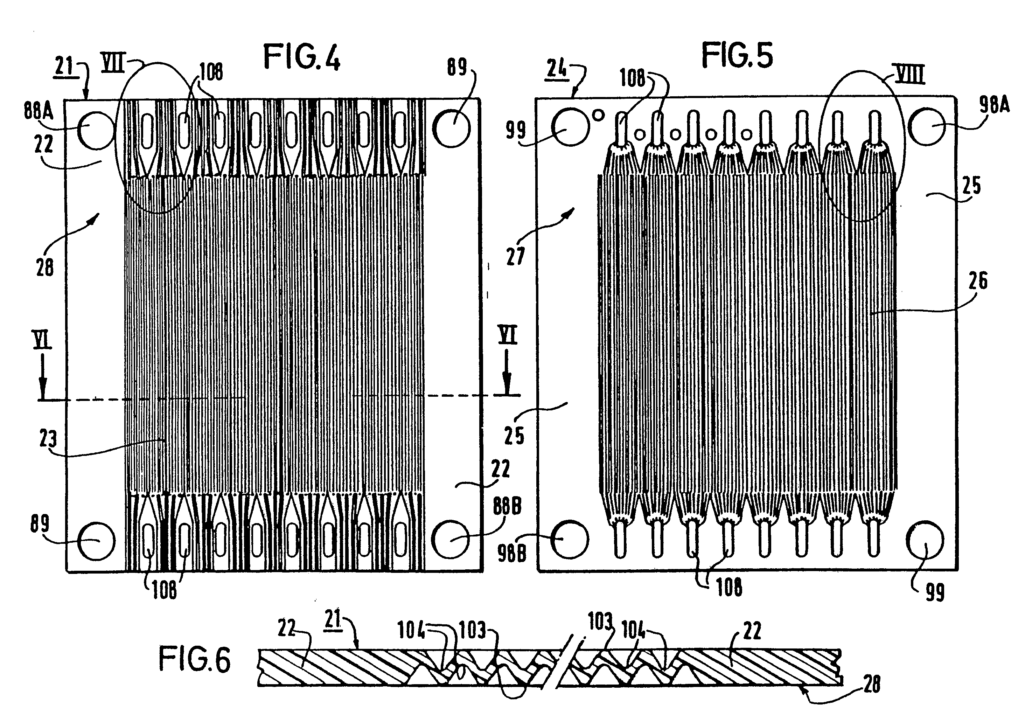

L'élément des figures 2 et 3 comporte une cathode 31 ou première électrode associée à la face cathodique 28 d'un premier collecteur de courant bipolaire 21. Ce dernier (voir figure 4) comporte un cadre 22 dit «premier cadre» en matériau plastique et une zone centrale conductrice 23 portant des cannelures, venant en contact électrique contre la face externe de la cathode 31. Le collecteur bipolaire 21 comporte sur sa face non visible sur la figure 2, mais identique à la face illustrée par la figure 5, une zone centrale conductrice anodique en contact électrique avec la face externe de l'anode d'un élément adjacent. La cathode 31 est en contact avec le comburant gazeux par sa face située en regard du collecteur 21 et en contact avec l'électrolyte par son autre face.

De même, une anode 41 ou seconde électrode est associée à la face anodique 27 d'un second collecteur de courant bipolaire 24. Comme le collecteur 21, il comporte un cadre 25 dit «second cadre» en matériau plastique et une zone centrale conductrice anodique 26, non visible sur la figure 2 mais visible sur la figure 5 en contact électrique avec l'anode 41. La zone centrale 29 du collecteur 24 visible sur la figure 2 est destinée à être en contact électrique avec la cathode d'un élément adjacent.

Une face de l'anode 41 est en contact avec l'électrolyte tandis que l'autre face située en regard du collecteur 24 est en contact avec le combustible gazeux.

L'anode 41 et la cathode 31 peuvent être à base de carbone et d'une matière plastique, par exemple de polytétrafluoréthylène et comporter chacune un catalyseur spécifique.

A titre illustratif et nullement limitatif, ces électrodes peuvent présenter une structure souple ainsi que décrit dans le brevet français n° 7 925 879 du 18 octobre 1979. Elles peuvent avoir été réalisées, en particulier, par les procédés décrits dans les brevets français n° 7 925 877 et 7 925 878 déposés également le 18 octobre 1979.

On donnera plus loin davantage de détails sur les collecteurs de courant.

En ce qui concerne le compartiment électrolytique vu en perspective éclatée dans la figure 3, on décrit ci-après ses différents composants.

La cathode 31 est assujettie à un troisième cadre 32 présentant un orifice central 34 en forme de quadrilatère et réalisé en matériau plastique isolant. De même, l'anode 41 est assujettie à un quatrième cadre 42 présentant un orifice central 40 en forme de quadrilatère et réalisé en matériau plastique. Lorsque les troisième et quatrième cadres sont solidarisés entre eux, à la cathode et à l'anode, ils définissent entre eux un compartiment électrolytique.

Les cadres 32 et 42 sont avantageusement en même matériau que les cadres 22 et 25. Il s'agit par exemple d'un matériau synthétique isolant tel que le polypropylène, le polyéthylène, le chlorure de polyvinyle, l'acrylonitrile-butadiène-styrène, les polysulfones, le polystyrène. L'épaisseur du cadre 32 peut être de l'ordre de 0,2 à 5 mm et de préférence de 0,5 à 1,5 mm. L'épaisseur du cadre 42 peut être comprise entre 0,1 et 5 mm et de préférence entre 0,3 et 0,6 mm.

Dans l'exemple représenté les orifices centraux 34 et 40 sont carrés.

Selon l'invention l'orifice central 34 du troisième cadre 32 comporte une grille séparatrice à trois barreaux 81, 82, 83. Ces barreaux ayant une épaisseur pouvant aller jusqu'à être égale à l'écartement inter-électrodes 31-41 sont venus de moulage (par compression ou injection) avec le troisième cadre 32. Si le matériau de ces barreaux n'est pas hydrophile, on pourra de préférence le rendre hydrophile par un traitement.

Selon un mode de réalisation équivalent, les barreaux sont solidaires du quatrième cadre 42.

Dans tous les cas précédents, les barreaux sont parallèles entre eux et du sens de l'écoulement de l'électrolyte. Un tel séparateur entraîne des pertes de charge minimales par rapport à l'écoulement de l'électrolyte et sa transparence vis-à-vis des ions de l'électrolyte est maximale grâce à l'absence de fils de trame.

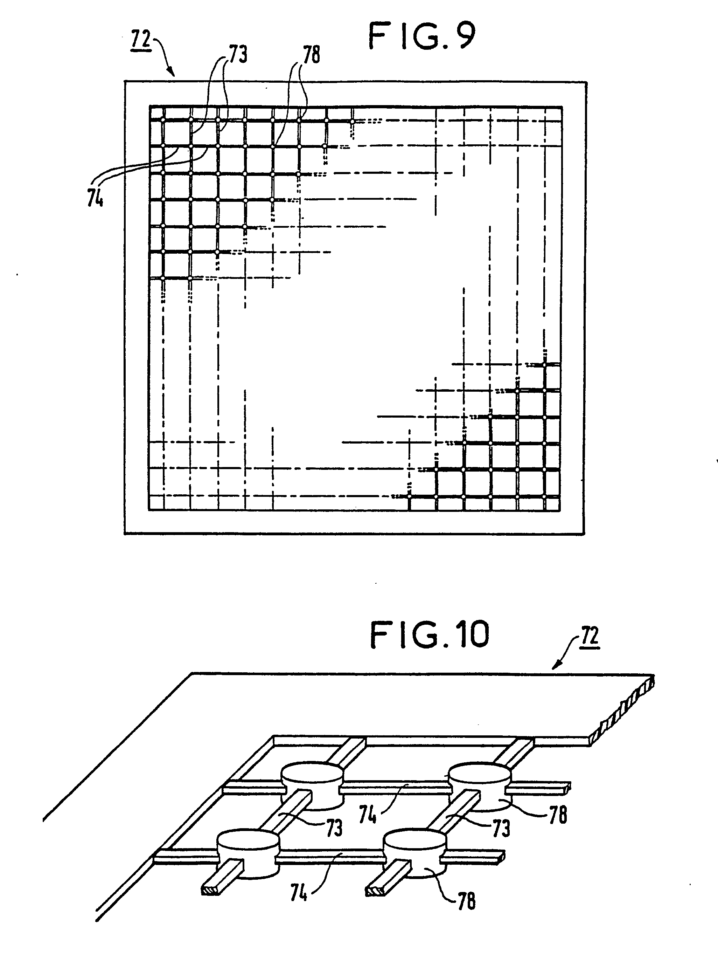

Les figures 9 et 10 montrent une variante de réalisation d'un séparateur selon l'invention susceptible de s'intégrer dans le compartiment électrolytique entre les électrodes. Il s'agit d'une grille en même matériau que le séparateur précédent formé de fils de chaîne 73 et de fils de trame 74. Aux intersections de ces fils sont prévus des picots 78 qui ont la forme de petits disques plus épais que les fils 73 et 74, et dont le diamètre est supérieur au pas des cannelures des électrodes. La référence 72 correspond au troisième ou au quatrième cadre schématiquement illustré.

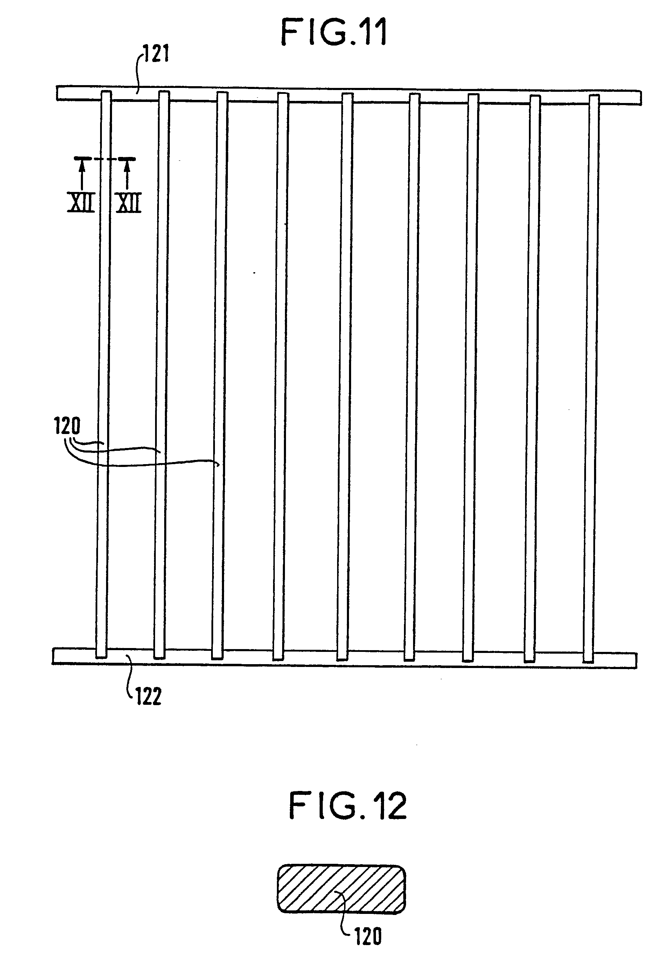

Les figures 11 et 12 illustrent une configuration de séparateurs comportant une dizaine de barreaux 120 parallèles entre eux et réunis à leurs extrémités par deux barres minces transversales 121, 122 appartenant aux cadres du compartiment électrolytique. On voit plus précisément dans la figure 12 la section sensiblement ovale des barreaux 120.

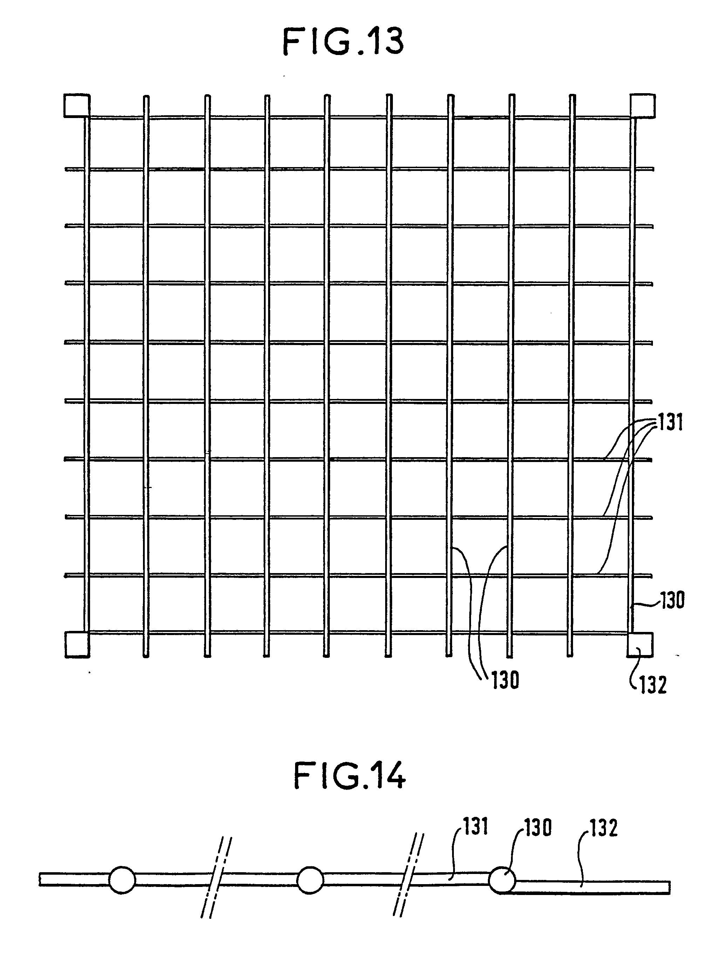

Les figures 13 et 14 illustrent un séparateur comportant une dizaine de barreaux 130 de section cylindrique reliés entre eux par des fils de trame 131 en même matériau; il est solidarisé aux cadres du compartiment électrolytique par l'intermédiaire de quatre pattes carrées minces 132.

Les dispositions précédentes permettent de maintenir un écartement constant entre les électrodes sur toute la surface de l'élément, quelles que soient les causes de rapprochement de celles-ci:

gauchissement des cadres, décollement local d'une électrode etc...., qui peuvent être de l'ordre du millimètre.

De préférence la surface de la grille est hydrophile pour faciliter, par effet de mèche, le remplissage complet du compartiment électrolytique, remplissage rendu difficile par la nature hydrophobe ou semi-hydrophobe des deux parois que constituent les surfaces des deux électrodes.

Les figures 4 à 8 donnent des détails supplémentaires sur les autres composants de la pile et notamment les collecteurs de courant. La figure 4 montre la face cathodique 28 du collecteur bipolaire 21 tandis que la figure 5 montre la face anodique 27 du collecteur 24. (On pourrait dire aussi que les figures 4 et 5 montrent respectivement la face cathodique et la face anodique d'un même collecteur 21 ou 24).

Pour le collecteur cathodique 21 on a référencé 88A (dans les figures 2 et 4) l'orifice d'entrée d'électrolyte, 88B l'orifice de sortie d'électrolyte et 89 des orifices destinés à faciliter le montage des composants. De même dans les figures 2 et 5 on a référencé 98A, 98B et 99 les orifices correspondants dans le collecteur anodique 24. La référence 108 se rapporte aux orifices d'acheminement de combustible.

Les matériaux constituant les cadres 22 et 25 peuvent comporter une charge appropriée, par exemple une matière inerte telle que du talc, en vue de modifier leurs propriétés mécaniques et thermiques et particulièrement d'obtenir un coefficient de dilatation thermique proche de celui de la zone centrale conductrice des collecteurs. A titre d'exemple, ces pièces pourront être constituées par du polypropylène chargé de talc, par exemple de 5 à 90% de talc et de préférence entre 35 et 45%.

La zone centrale conductrice de ces collecteurs est visible en coupe agrandie dans la figure 6; elle est munie de cannelures 103 définissant des canaux 104 de direction moyenne verticale pour la circulation des flux gazeux. Le pas et la profondeur des cannelures et donc des canaux peut être compris entre 0,2 mm et 5 mm, et de préférence entre 0,5 mm et 1,5 mm.

La zone centrale conductrice des collecteurs de courant peut avantageusement être réalisée à partir du même matériau plastique que celui entrant dans la constitution des cadres, mais dans lequel on introduit une charge conductrice, par exemple une poudre métallique, une poudre de graphite, de carbone, un noir de four, un noir d'acétylène, des fibres de carbone, de graphite, ou un mélange de ces différents corps. A titre d'exemple elle pourrait être constituée par du polypropylène chargé de noir de carbone par exemple de 10 à 90%, et de préférence de 30 à 50%.

Le cadre et les collecteurs peuvent être réalisés par thermocompression, ou par moulage par injection. Ce dernier procédé est particulièrement avantageux dans le cas de la réalisation des collecteurs de courant car on introduit simultanément à l'état fluide dans le moule les matières constituant d'une part la zone centrale conductrice et d'autre part la zone périphérique isolante, ce qui permet d'obtenir une soudure des deux matériaux et donc d'éviter une discontinuité entre les deux zones. En outre ce procédé est particulièrement économique.

On précise ci-dessous les moyens d'alimentation en fluides de compartiments et anodique.

La face 28 du collecteur 21 visible sur la figure 4 est destinée à être alimentée en comburant, par exemple en oxygène, alors que la face 27 du collecteur 24 visible sur la figure 5 est alimentée en combustible, par exemple en hydrogène.

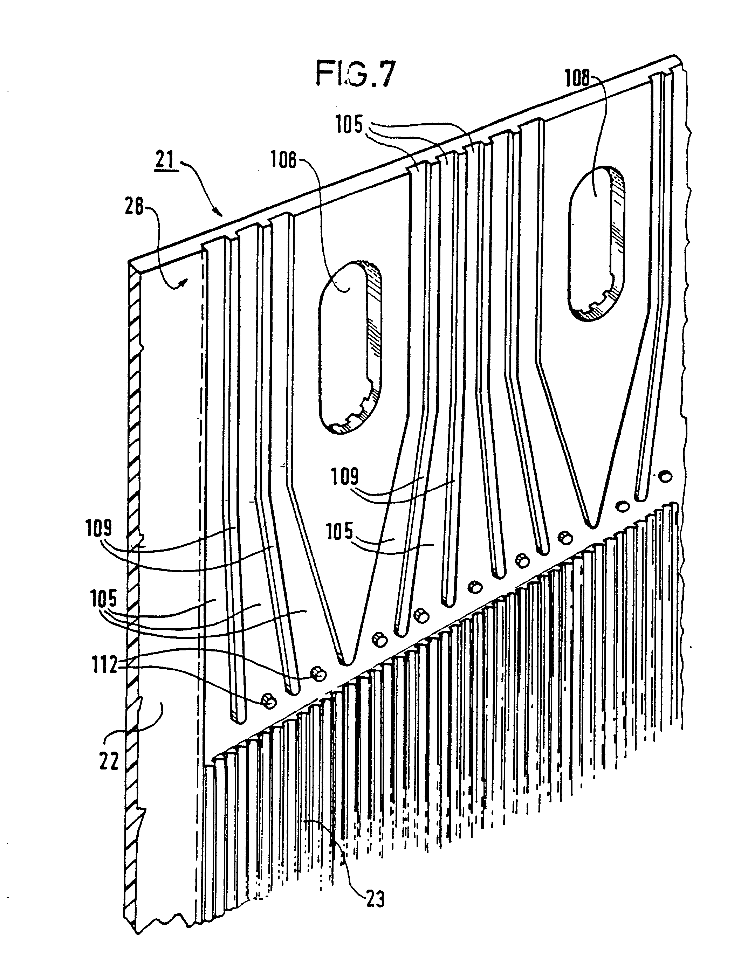

Comme cela apparaît en perspective agrandie dans la figure 7, la partie supérieure de la face 28 du cadre 22 du collecteur 21 est munie de rainures ou évidements tels que 105 communiquant avec l'extérieur et permettant l'alimentation de la face 28 du collecteur par le comburant. Des rainures analogues sont prévues dans la partie inférieure du cadre 22 pour l'évacuation du comburant. On réalise ainsi pour ce dernier un parcours quasi rectiligne évitant les pertes de charge dues à des changements de direction, pertes de charge qui pourraient être particulièrement importantes avec un comburant tel que l'air atmosphérique en raison du débit très élevé nécessaire.

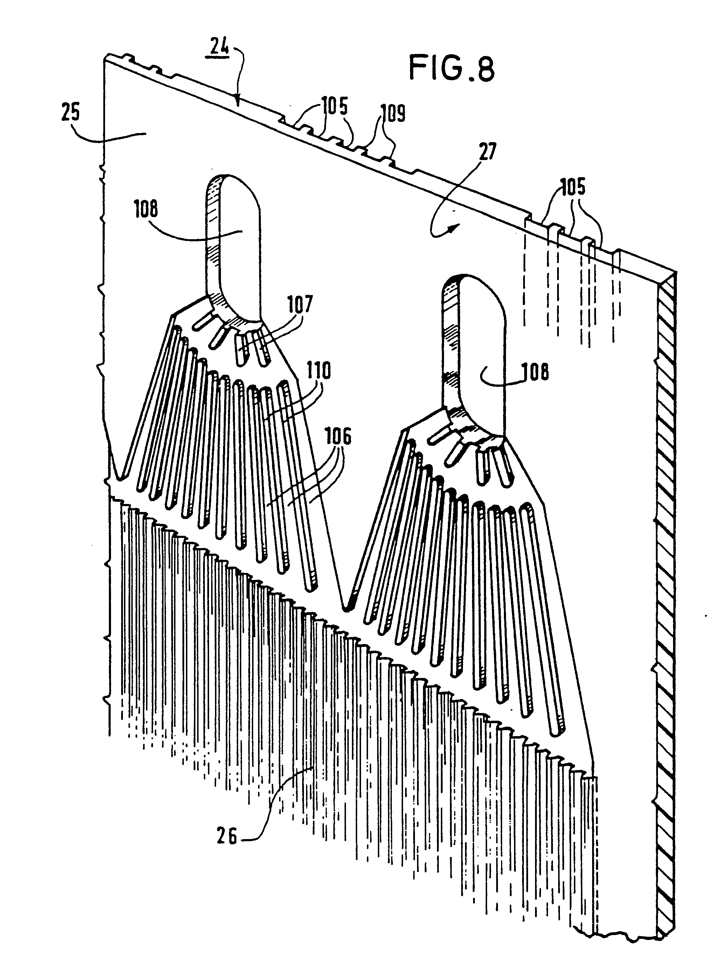

Comme cela apparaît en perspective agrandie dans la figure 8, la partie supérieure de la face anodique 27 du cadre 25 du collecteur 24 est munie de rainures ou évidements tels que 106 permettant l'alimentation en combustible de la face anodique du collecteur à partir des orifices d'acheminement 108. Des rainures analogues sont prévues dans la partie inférieure du cadre 25 en vue de l'évacuation du combustible.

Des moyens supplémentaires de répartition des flux sont disposés dans lesdites rainures et évidements 105 et 106.

Ces moyens sont constitués par des nervures allongées, formant des canaux de répartition, la face supérieure des nervures affleurant le plan de la face du collecteur portant les rainures et évidements et servant de ce fait à maintenir l'écartement entre le fond du collecteur supportant les nervures et les constituants adjacents de la pile. Les canaux ainsi formés sont sensiblement verticaux.

Il s'ensuit que, les canaux délimités par les cannelures sur les parties conductrices du collecteur présentant également une direction moyenne verticale sur la figure, les flux de comburant et de combustible conservent sensiblement la même direction verticale tout le long des faces du collecteur.

Comme on peut le constater en se reportant sur la figure 7, les nervures de répartition 109 du flux de comburant sont allongées et définissent des canaux de répartition, sensiblement verticaux sur la figure s'élargissant dans leur partie adjacente à la partie conductrice 23 du collecteur 21. Le parcours du comburant le long de la face cathodique du collecteur 21 est quasiment rectiligne, sans changement de direction significatif et sans obstacle. Entre les extrémités des nervures 109 situées au voisinage de la partie conductrice 23 on dispose des picots 112.

Les canaux de répartition débouchant de plus sur tout le côté horizontal de la partie conductrice 23 du collecteur, on obtient une excellente répartition du comburant au niveau de la face cathodique.

Comme on peut le constater en se reportant sur la figure 8, les orifices d'alimentation en combustible 108 présentant une forme oblongue, les rainures ou évidements 106 permettant l'acheminement du combustible débouchent au voisinage des parties des orifices oblongs situées le plus près de la zone centrale conductrice 26 du collecteur 24. Les nervures de répartition de combustible définissent un réseau s'évasant depuis lesdits orifices 108 vers la partie conductrice 26 du collecteur. Des nervures 107 situées au voisinage des orifices 108 définissent des canaux alimentant eux-mêmes un plus grand nombre de canaux intermédiaires définis par des nervures 110, de longueur plus importante et conduisant au voisinage des canaux de la partie conductrice 26 du collecteur, un canal intermédiaire alimentant au moins un canal 104 de la partie conductrice 26 du collecteur 24.

L'allongement des canaux de distribution de combustible permet de réaliser des empilements importants d'éléments en ayant de faibles pertes de charge du gaz dans les canaux de circulation communs à tous les éléments.

Bien entendu, la pile qui vient d'être décrite n'a été donnée qu'à titre d'exemple de réalisation. On pourra sans sortir du cadre de l'invention remplacer tout moyen par un moyen équivalent. En ce qui concerne le séparateur on pourra modifier le nombre de barreaux de la grille, ainsi que la forme et les dimensions de ses mailles.

**Revendications**

1. Pile à combustible (1), constituée par une pluralité d'éléments identiques (20) juxtaposés, disposés en contact électrique les uns avec les autres, et solidarisés selon une séquence élémentaire déterminée, ladite pile comportant, en commun pour tous ses éléments, trois circuits de distribution:

— un circuit de distribution d'électrolyte à partir d'une source extérieure comprenant notamment un canal d'amenée commun (6) et un canal d'évacuation commun (7),

— un circuit de distribution de combustible à partir d'une source extérieure et comprenant notamment au moins un canal (8) d'amenée de combustible et au moins un canal (9) d'évacuation jusqu'à l'extérieur de la pile, du combustible non consommé et des gaz inertes,

— un circuit de distribution de comburant comportant notamment une pluralité d'orifices (105) d'entrée et de sortie de comburant situés sur les faces inférieure et supérieure de la pile,

chaque élément comportant par ailleurs:

— une première (31) et une seconde électrodes (41) poreuses présentant une forme de préférence plane et à faces parallèles, respectivement une cathode et une anode comportant chacune un catalyseur spécifique,

— un électrolyte remplissant l'intervalle situé entre lesdites électrodes,

— un premier et un second collecteurs (21, 24) de courant bipolaires imperméables, comportant respectivement un premier (22) et un second cadres (25) en matériau plastique entourant une zone centrale conductrice (23) portant des cannelures (103) sur chacune de ses faces, le premier collecteur (21) venant, par les sommets de sa face cathodique (28), en contact électrique avec la surface externe de ladite cathode (31), et par sa face anodique (27) en contact électrique avec la surface externe de l'anode (41) d'un élément adjacent, et le deuxième collecteur (24) venant par les sommets de sa face anodique en contact électrique avec la surface externe de ladite anode, et par sa face cathodique en contact électrique avec la cathode de l'autre adjacent, ledit comburant gazeux circulant entre ladite cathode et la face cathodique du premier collecteur et ledit combustible gazeux circulant entre ladite anode et la face anodique du second collecteur, lesdits premier et second cadres (22, 25) étant munis d'orifices (88A, 88B, 98A, 98B, 108) pour la circulation dudit électrolyte et dudit combustible à travers la pile, lesdits orifices venant contribuer par leur juxtaposition à la formation desdits canaux communs d'amenée et d'évacuation, ladite première électrode (31) étant assujettie à un troisième cadre (32) présentant un orifice central (34) en forme de quadrilatère, réalisé en un matériau plastique, les parties inférieure et supérieure du troisième cadre comportant des orifices (37, 38A, 38B) pour l'acheminement à travers la pile du combustible et de l'électrolyte correspondant auxdits orifices (108, 88A, 88B, 98A, 98B) ménagés dans les cadres des collecteurs (21, 24), des moyens étant prévus sur une face dudit troisième cadre (32) pour permettre l'acheminement de l'électrolyte dudit canal d'amenée (6), vers un compartiment électrolytique situé entre les deux électrodes et dudit compartiment vers ledit canal d'évacuation (7), lesdits moyens comportant des rainures (51) débouchant dans des parties évidées (52) formant chambres de répartition et de distribution et de collationnement d'électrolyte, disposées sur les parties inférieure et supérieure du troisième cadre (32) le long des deux côtés opposés de l'évidement central et communiquant avec le compartiment électrolytique au moyen d'une pluralité de microcanaux parallèles délimités par des nervures (54), ladite second électrode étant assujettie sur une face d'un quatrième cadre (42) en regard dudit second collector de courant (24), ledit quatrième cadre étant un matériau plastique, présentant un contour identique à celui du troisième cadre (32) sur lequel est assujettie la première électrode (31) et des orifices (67, 68A, 68B) d'acheminement de combustible et d'électrolyte correspondant à ceux prévus sur ledit troisième cadre, et étant appliqué par une face plane sur la face dudit troisième cadre présentant les rainures et les chambres de répartition et de distribution et de collationnement de l'électrolyte,

la solidarisation des cadres selon une séquence élémentaire déterminée réalisant un empilement répétitif desdits éléments (20) et définissant ledit réseau de distribution de combustible, ledit réseau de distribution de comburant et ledit réseau de distribution d'électrolyte,

caractérisée par le fait que ledit compartiment électrolytique contient un séparateur constitué d'une grille (81, 82, 83; fig. 9 à 13) en matériau isolant formant une pièce unitaire avec ledit troisième ou ledit quatrième cadre, et comprenant des barreaux, qui sont parallèles entre eux et au sens de l'écoulement de l'électrolyte.

2. Pile à combustible selon la revendication 1, caractérisée par le fait que lesdits barreaux sont reliés entre eux par des fils de trame en même matériau (fig. 9, fig. 10, fig. 13, fig. 14).

3. Pile à combustible selon la revendication 2, caractérisée par le fait que des picots espaceurs (78) sont prévus aux croisements desdits barreaux et desdits fils de trame.

4. Pile à combustible selon la revendication 3, caractérisée par le fait que lesdits picots (78) ont la forme de disques dont le diamètre est supérieur au pas des cannelures présentées par lesdites électrodes.

5. Pile à combustible selon l'une des revendications précédentes, caractérisée par le fait que le matériau desdits barreaux est choisi parmi le polypropylène, le chlorure de polyvinyle, le nylon et le polyéthylène.

## Patentansprüche

1. Brennstoffbatterie (1), bestehend aus einer Vielzahl von identischen, einander benachbarten Elementen (20), die miteinander in elektrischem Kontakt stehen und in einer vorbestimmten Elementenreihenfolge aneinander befestigt sind, wobei die Batterie für alle Elemente gemeinsam drei Verteilerkreisläufe aufweist:
— einen Elektrolytverteilerkreislauf, der an einer äußeren Quelle beginnt und insbesondere einen gemeinsamen Einlaßkanal (6) sowie einen gemeinsamen Auslaßkanal (7) aufweist,
— einen Brennstoffverteilerkreislauf, der an einer äußeren Quelle beginnt und insbesondere mindestens einen Einlaßkanal (8) für den Brennstoff und mindestens einen nach außerhalb der Zelle führenden Auslaßkanal (9) für den nicht verbrauchten Brennstoff und für inerte Gase aufweist,
— einen Sauerstoffträger-Verteilerkreislauf, der insbesondere eine Vielzahl von Durchtrittsöffnungen (105) für den Ein- und Austritt des Sauerstoffträgers in der unteren und der oberen Oberfläche der Batterie aufweist,
wobei jedes Element weiter aufweist:
— eine erste (31) und eine zweite (41) poröse Elektrode, die vorzugsweise eine flache Form mit parallelen Flächen besitzt, nämlich eine Kathode und eine Anode mit je einem spezifischen Katalysator,
— einen Elektrolyten, der den Raum zwischen den Elektroden ausfüllt,
— einen ersten und einen zweiten undurchlässigen Bipolarstrom-Kollektor (21, 24), der einen ersten (22) bzw. einen zweiten (25) Rahmen aus Kunststoff besitzt, welcher eine zentrale leitende Zone (23) mit Rillen (103) auf jeder Seite umgibt, wobei der erste Kollektor (21) über die Vorsprünge seiner kathodenseitigen Oberfläche (28) in elektrischen Kontakt mit der Außenoberfläche der Kathode (31) und mit seiner anodenseitigen Oberfläche (27) in elektrischen Kontakt mit der Außenoberfläche der Anode (41) jeweils eines benachbarten Elements kommt, und der zweite Kollektor (24) über die Vorsprünge seiner anodenseitigen Oberfläche in elektrischen Kontakt mit der Außenoberfläche der Anode und mit seiner kathodenseitigen Oberfläche in elektrischen Kontakt mit der Kathode des anderen benachbarten Elements kommt, wobei der gasförmige Sauerstoffträger zwischen der Kathode und der kathodenseitigen Oberfläche des ersten Kollektors und der gasförmige Brennstoff zwischen der Anode und der anodenseitigen Oberfläche des zweiten Kollektors zirkuliert und der erste und der zweite Rahmen (22, 25) mit Durchtrittslöchern (88A, 88B, 98A, 98B, 108) für den Umlauf des Elektrolyten und des Brennstoffs durch die Batterie ausgestattet ist, wobei die Durchtrittsöffnungen infolge ihrer fluchtenden Lage zur Bildung der gemeinsamen Einlaß- und Auslaßkanäle beitragen, wobei die erste Elektrode (31) an einen dritten Rahmen (32) aus Kunststoff mit einer vierseitig begrenzten zentralen Durchtrittsöffnung angebracht ist und der untere und obere Abschnitt des dritten Rahmens Durchtrittsöffnungen (37, 38A, 38B) zur Durchleitung des Brennstoffs und des Elektrolyten aufweist, die den in die Rahmen der Kollektoren (21, 24) eingebrachten Durchtrittsöffnungen (108, 88A, 88B, 98A, 98B) entsprechen, wobei auf einer Fläche des dritten Rahmens (32) Mittel zur Weiterleitung des Elektrolyten vom Einlaßkanal (6) zu einer zwischen den beiden Elektroden gelegenen Elektrolytkammer und von dieser Kammer zum Auslaßkanal (7) vorgesehen sind, wobei die Mittel Nuten (51) besitzen, die in ausgesparte Partien (52) münden, welche Aufteilungs- und Zusammenführungskammern für den Elektrolyten bilden und auf den unteren und oberen Abschnitten des dritten Rahmens (32) entlang der beiden einander gegenüberliegenden Seiten der zentralen Aussparung verlaufen und mit der Elektrolytkammer über eine Vielzahl von parallelen, durch Rippen (54) begrenzten Mikrokanälen in Verbindung stehen, wobei die zweite Elektrode auf einer Seite eines vierten, dem zweiten Stromkollektor gegenüberstehenden Rahmen (24) aus Kunststoff angebracht ist, der einen Umriß besitzt, welcher demjenigen des dritten Rahmens (32), an dem die erste Elektrode (41) angebracht ist, entspricht und der Durchtrittsöffnungen (67, 68A, 68B) zur Weiterleitung des Brennstoffs und des Elektrolyten aufweist, die denjenigen im dritten Rahmen entsprechen, und wobei der Rahmen mit einer flachen Seite an der Fläche des dritten Rahmens mit den Nuten und Aufteilungs-, Verteilungs- und Zusammenführungskammern für den Elektrolyten anliegt, wobei die Befestigung der Rahmen aneinander entsprechend einer vorherbestimmten Elementenfolge einen Stapel von sich wiederholenden Elementen (20) bildet und das Brennstoffverteilernetz, das Sauerstoffträgerverteilernetz und das Elektrolytverteilernetz definiert, dadurch gekennzeichnet, daß die Elektrolytkammer einen aus einem Gitter (81, 82, 83, Fig. 9 bis 13) bestehenden Separator aus isolierendem Material enthält, der mit dem dritten oder vierten Rahmen ein einziges Stück bildet und Stäbe aufweist, die zueinander und zur Fließrichtung des Elektrolyten parallel verlaufen.

2. Brennstoffbatterie nach Anspruch 1, dadurch gekennzeichnet, daß die Stäbe miteinander durch Schußfäden aus dem gleichen Material verbunden sind (Fig. 9, Fig. 10, Fig. 13, Fig. 14).

3. Brennstoffbatterie nach Anspruch 2, dadurch gekennzeichnet, daß an den Kreuzungspunkten der Stäbe und Schußfäden Distanzstifte (78) angebracht sind.

4. Brennstoffbatterie nach Anspruch 3, dadurch gekennzeichnet, daß die Stifte (78) die Gestalt von Scheiben besitzen, deren Durchmesser größer als der Teilungsabstand der Rillen der Elektroden ist.

5. Brennstoffbatterie nach einem der vorhergehenden Ansprüche, dadurch gekennzeichnet, daß das Material, aus dem die Stäbe bestehen, aus den Stoffen Polypropylen, Polyvinylchlorid, Nylon und Polyäthylen gewählt wird.

## Claims

1. A fuel cell structure (1) constituted by a plurality of identical juxtaposed cells (20) which are disposed in electrical contact with one another and which are fixed together in a predetermined element sequence, said cell structure including three distribution circuits which are common to all of the cells, as follows:

— an electrolyte distribution circuit for distributing electrolyte from an external source and including, in particular, a common inlet channel (6) and a common outlet channel (7),

— a fuel distribution circuit for distributing fuel from an external source and including, in particular, at least one fuel inlet channel (8) and at least one outlet channel (9) for removing unburnt fuel and inert gases from the cell structure,

— an oxidant distribution circuit including, in particular, a plurality of oxidant inlet and outlet orifices (105) situated in the bottom and top faces of the cell structure,

each cell additionally comprising:

— first (31) and second (41) porous electrodes which are preferably plane in shape with parallel faces, one being a cathode and the other an anode, and each including a specific catalyst,

— an electrolyte filling the gap situated between the said electrodes,

— first and second impermeable bipolar current collectors (21, 24) comprising respective first (22) and second (25) frames of plastic material surrounding a central conductive zone (23) having channels (103) on each of its faces, the first collector (21) coming into electrical contact via the high points (28) of its cathode face with the external surface of the said cathode (31), and via its anode face (27) with the external surface of the anode (41) of an adjacent cell, and the second collector (24) coming into electrical contact, via the high points of its anode face with the external surface of the said anode, and via its cathode face with the cathode of the other adjacent cell, the oxidizing gas flowing between said cathode and the cathode face of the first collector, and the fuel gas flowing between said anode and the anode face of the second collector, said first and said second frames (22, 25) being provided with orifices (88A, 88B, 98A, 98B, 108) to allow the electrolyte and the fuel to flow through the fuel cell, said orifices contributing by their juxtaposition to defining said common inlet and outlet channels,

said first electrode (31) being applied against a third frame (32) made of plastic material and having a central orifice (34) in the form of a quadrilateral, the top and bottom portions of the third frame including orifices (37, 38A, 38B) for conveying fuel and electrolyte through the fuel cell, said orifices corresponding to the orifices (88A, 88B, 98A, 98B, 108) provided in the frames of the collectors (21, 24), means being provided on one face of the third frame (32) to enable electrolyte to be conveyed from the inlet channel (6) to an electrolyte compartment situated between the two electrodes, and from the said compartment to an outlet channel (7), said means including grooves (51) opening out into set back portions (52) that constitute electrolyte distributing, collecting and collating chambers disposed on the top and bottom portions of the third frame (32) along two opposite sides of the central orifice and in communication with the electrolyte chamber by means of a plurality of parallel microchannels delimited by ribs (54), the second electrode being applied against one of the faces of a fourth frame (42) facing said second current collector (24), said fourth frame being made of an insulating plastic material, and being of identical contour to the third frame (32) against which the first electrode (31) is applied, having fuel and electrolyte conveying orifices (67, 68A, 68B) corresponding to those provided in the said third frame, and being applied by a plane face against the face of the said third frame having the grooves and the electrolyte distributing, collecting and collating chambers,

— the frames being fixed together in a predetermined element sequence to constitute a repetitive stack of cells (20) and to define said fuel distribution network, said oxidant distribution network, and said electrolyte distribution network, characterized in that said electrolyte compartment contains a separator constituted by a grating (81, 82, 83; Fig. 9 through 13) of insulating material forming an integral part with said third frame or said fourth frame, and comprising bars which are parallel to one another and to the direction of electrolyte flow.

2. A fuel cell structure according to claim 1, characterized in that said bars are connected to one another by cross threads of the same material (Fig. 9, Fig. 10, Fig. 13, Fig. 14).

3. A fuel cell structure according to claim 2, characterized in that spacing tabs (78) are provided at the cross-points between said bars and said cross threads.

4. A fuel cell structure according to claim 3, characterized in that said tabs (78) are disk-shaped and have a diameter which is greater than the pitch of the channels in said electrode.

5. A fuel cell structure according to any preceding claim, characterized in that the material of said bars is selected from polypropylene, polyvinyl chloride (PVC), nylon and polyethylene.

# FIG.1

# FIG.2

FIG.3

## FIG.4

21 VII 108 89

88A
22

28

VI

23

89 108 88B 22

## FIG.5

24 108 VIII

99 98A

25

27 26

VI

25

22

98B 108 99

## FIG.6

22 21 104 103 103 104 22

28

EP 0 199 611 B1

# FIG.7

# FIG.8

# FIG.9

# FIG.10

# FIG.11

121

120

122

# FIG.12

120

# FIG.13

131

130

130

132

# FIG.14

131  130  132